# EUROPÄISCHE PATENTSCHRIFT

(11) **EP 2 977 510 B1**
(45) Veröffentlichungstag und Bekanntmachung des Hinweises auf die Patenterteilung: **13.06.2018**
(21) Anmeldenummer: 15450027.6
(22) Anmeldetag: 13.07.2015
(51) Int. Cl.: D21B 1/32, D21B 1/34

(54) **VORRICHTUNG ZUM AUFBEREITEN VON STOFF**
DEVICE FOR TREATING MATERIAL
DISPOSITIF DESTINE A LA PREPARATION DE MATIERE

(30) Priorität: 22.07.2014 AT 5812014; 15.06.2015 AT 3802015
(43) Veröffentlichungstag der Anmeldung: 27.01.2016
(73) Patentinhaber: PGA Putz-Granitzer-Anlagenbau Gesellschaft m.b.H., 9241 Wernberg (AT)
(72) Erfinder: STIRN, Christian, 9722 Puch (AT)
(74) Vertreter: Beer & Partner Patentanwälte KG

(56) Entgegenhaltungen:
- EP-A1- 2 284 313
- AT-B1- 510 753
- GB-A- 1 468 775
- US-A- 1 923 888
- US-A- 2 954 174

## Beschreibung

Die Erfindung betrifft ein Verfahren und eine Vorrichtung zum Aufbereiten von Fasern enthaltenden Stoffsuspensionen mit den Merkmalen der einleitenden Teile der unabhängigen Ansprüche 1 und 11.

Ein Verfahren zum Aufbereiten von Stoff und eine hierfür verwendbare Vorrichtung ist aus der AT 510 753 B1 bekannt.

Bei dem aus der AT 510 753 B1 bekannten Verfahren zum Aufbereiten von Stoff (Zellstoff oder Altpapier) wird der Zellstoff oder das Altpapier in einem Pulper zu einer Zellstoffsuspension aufgelöst. Dabei soll so gearbeitet werden, dass das Vereinzeln und Entstippen der Fasern durch Dispergieren der Zellstoffsuspension ausgeführt wird, dass beim Dispergieren in der Zellstoffsuspension eine Strömung erzeugt wird, dass beim Dispergieren zum Fibrillieren der Fasern in der Zellstoffsuspension eine im Inneren der Zellstoffsuspension nach unten gerichtete Strömung, die im unteren Bereich der Zellstoffsuspension nach außen gerichtet ist, erzeugt wird, dass die nach außen gerichtete Strömung gegen stillstehende Leitbleche gerichtet wird und dass in der nach außen gerichteten Strömung auf die Fasern in der Zellstoffsuspension ein Scheren der Fasern des Zellstoffes und das Fibrillieren ausgeführt wird.

Die aus der AT 510 753 B1 bekannte Vorrichtung zum Dispergieren einer Zellstoffsuspension umfasst einen Behälter, radial in das Innere des Behälters weisende Leitbleche, einen im Behälter vorgesehenen Rotor, am Rotor Einrichtungen zum Erzeugen einer radial nach außen gerichteten Strömung der Zellstoffsuspension im Behälter und einen Propeller zum Erzeugen der nach unten gerichteten Strömung der Zellstoffsuspension.

Aus der EP 1 287 878 A2 ist eine Vorrichtung zum Mischen, Kneten, Fibrillieren, Mahlen und Aufschließen von Materialien bekannt. Die bekannte Vorrichtung umfasst einen Behälter, in dem ein Stator mit Zahnkränzen und ein Rotor mit Zähnen vorgesehen sind. Die Zähne des Rotors wirken mit den Zähnen der Zahnkränze des Stators zusammen. Zwischen die Arme des Rotors ragt ein Leittrichter, der den von oben her nachrückenden Materialstrom auf den mittleren Bereich des Behälters konzentrieren soll. Die Außenfläche des Leittrichters begrenzt einen den Materialfluss drosselnden Ringspalt.

Bei der Vorrichtung der EP 1 287 878 A2 wird durch die Wirkzone der Zähne am Rotor und Stator keine Zwangsführung des Produktstromes erreicht. Problematisch bei der bekannten Vorrichtung ist es, dass der Produktstrom den Rotor oft nicht erreicht oder aus dem eigentlichen Wirkbereich der Zähne am Rotor und der Zähne am Stator zwischen den Rotorarmen nach oben entweicht, ohne dass auf dem Produktstrom eingewirkt wird. Dies bedeutet, dass bei der Vorrichtung gemäß EP 1 287 878 A2 ein Großteil des zu bearbeitenden Produktstromes im Behälter unvollständig verarbeitet zirkuliert.

Die DE 27 22 906 A1 betrifft eine Anlage zum Entstippen von Stoffsuspensionen für Papiermaschinen. Die Anlage umfasst mehrere Entstipp-Vorrichtungen, von denen jede mit einem Stator und einem Rotor versehen ist, die ineinandergreifende Zahnreihen mit Zähnen und dazwischen befindlichen Schlitzen aufweisen. Irgendwelche Maßnahmen, den Strömungsweg der Stoffsuspension mit dem Ziel zu führen, ein wirksames und vollständiges Entstippen zu erreichen, sind bei der Anlage gemäß der DE 27 22 906 A1 nicht vorgesehen.

Aus der US 2,823,871 A ist eine mehrstufige Mühle bekannt, bei der eine steil konische Vormahlzone und eine flache, scheibenförmige End-Mahlzone vorgesehen sind. Die End-Mahlzone umfasst ringförmige Mahlkörper, die relativ zueinander in Bewegung versetzt werden.

Bei dem Pulper der GB 1 468 775 A ist, wie auch Fig. 1 zeigt, keine räumliche Trennung zwischen der nach außen oben gerichteten Strömung und der innen nach unten gerichteten Strömung vorgesehen. Dies zeigen die Pfeile, die im Inneren des Pulpers 30 der GB 1 468 775 A eingezeichnet sind. Die Leitung dient ausschließlich dazu, Stoff, der durch den Spalt zwischen dem Rotor und dem Boden des Pulpers tritt, in den Pulper zurückzuleiten.

US 1,923,888 A befasst sich mit dem Herstellen von Emulsionen aus Bitumen (Asphalt) und von Pulpe durch Reduktion von Faserstoffen. Die Pulpe und die Emulsion sollen dann vereinigt werden, um Platten oder Dachpappe zu bilden.

Die aus US 1,923,888 A bekannte Vorrichtung umfasst Förderpropeller, mit welchen die Komponenten der Emulsion aus dem Innenraum einer Kammer gefördert werden. Die Komponenten strömen durch Rohre in die Kammer zurück und verlassen diese nach oben durch einen konischen Trichter und ein Auslassrohr.

Irgendwelche Mittel, eine nach oben gerichtete Strömung von einer nach unten gerichteten Strömung räumlich zu trennen, lehrt US 1,923,888 A nicht.

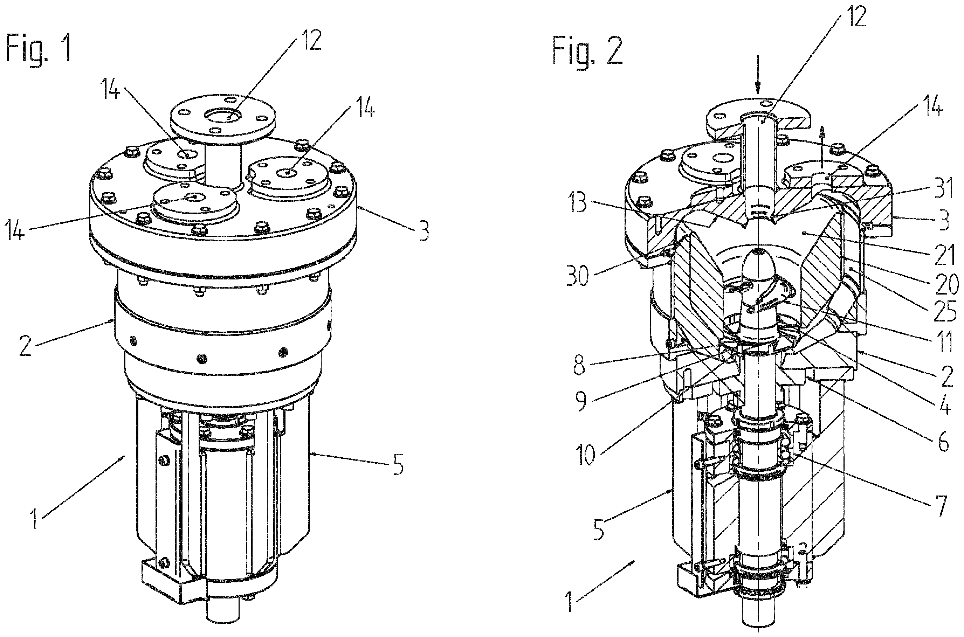

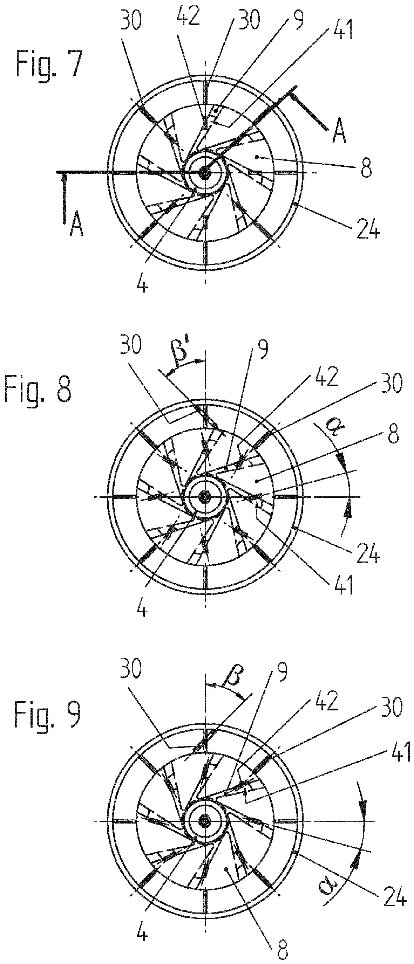

EP 2 284 313 A1 offenbart eine Anlage zum Aufbereiten von Altpapier, die eine Einheit zum Herstellen von Pulpe enthält. Fig. 2 und Fig. 8 zeigen solche Einheiten.

Bei der in Fig. 2 gezeigten Einheit zum Herstellen von Pulpe ist eine Einheit für das Rühren, Zerkleinern und Mazerieren von Altpapier mit einem Behälter vorgesehen. In dem Behälter ist ein drehangetriebener Impeller vorgesehen. Während des Herstellens der Pulpe ist das Auslassventil geschlossen. Nur wenn auch die Einheit mit der Mahlvorrichtung in Betrieb ist, wird Pulpe über die Leitung bei geöffnetem Ventil im Kreis geführt.

EP 2 284 313 A1 zeigt weder in Fig. 8 noch in Fig. 2 irgendwelche Maßnahmen, welche die Strömungen der Pulpe im Pulper kontrollieren können.

Der Erfindung liegt die Aufgabe zugrunde, das Verfahren und die Vorrichtung der aus der AT 510 753 B1 bekannten Gattung im Hinblick auf eine Verbesserung der Strömungsverhältnisse der Suspension in der Vorrichtung weiter zu entwickeln.

Gelöst wird diese Aufgabe erfindungsgemäß mit einem Verfahren, das die Merkmale von Anspruch 1 aufweist.

Gelöst wird diese Aufgabe erfindungsgemäß weiters mit einer Vorrichtung, welche die Merkmale von Anspruch 11 aufweist.

Bevorzugte und vorteilhafte Ausgestaltungen des erfindungsgemäßen Verfahrens und der erfindungsgemäßen Vorrichtung sind Gegenstand der Unteransprüche.

Das erfindungsgemäße Verfahren zeichnet sich dadurch aus, dass die Stoffsuspension in einem Behälter in Strömung versetzt wird, wobei die im äußeren Bereich nach oben gerichtete Strömung durch einen Ringspalt zwischen der Wand des Behälters und einen im Behälter angeordneten, ringförmigen Verdrängungskörper geführt ist.

In einer beispielsweisen Ausführungsform kann sich das erfindungsgemäße Verfahren dadurch auszeichnen, dass aufzubereitende Stoffsuspension von oben her in die im Inneren der Stoffsuspension nach unten gerichtete Strömung aufgegeben wird.

In einer beispielsweisen Ausführungsform kann sich das erfindungsgemäße Verfahren dadurch auszeichnen, dass aufbereitete Stoffsuspension der im äußeren Bereich nach oben gerichteten Strömung entnommen wird.

In einer beispielsweisen Ausführungsform kann sich das erfindungsgemäße Verfahren dadurch auszeichnen, dass die nach außen gerichtete Strömung erzeugt wird, indem auf die Stoffsuspension eine radial nach außen gerichtete Beschleunigung ausgeübt wird.

In einer beispielsweisen Ausführungsform kann sich das erfindungsgemäße Verfahren dadurch auszeichnen, dass die Beschleunigung durch einen drehangetriebenen Rotor mit Dispergierscheibe erteilt wird.

In einer beispielsweisen Ausführungsform kann sich das erfindungsgemäße Verfahren dadurch auszeichnen, dass die in der Stoffsuspension im Inneren der Stoffsuspension nach unten gerichtete Strömung durch einen drehangetriebenen Propeller erzeugt wird.

In einer beispielsweisen Ausführungsform kann sich das erfindungsgemäße Verfahren dadurch auszeichnen, dass zusammenhängende Fasern der Stoffsuspension durch Durchmischen der Stoffsuspension aufgelöst (entstippt) werden.

In einer beispielsweisen Ausführungsform kann sich das erfindungsgemäße Verfahren dadurch auszeichnen, dass das Dispergieren des Stoffes im Batchbetrieb (absatzweise) oder im kontinuierlichen Durchlaufbetrieb ausgeführt wird.

In einer beispielsweisen Ausführungsform kann sich das erfindungsgemäße Verfahren dadurch auszeichnen, dass die Fasern der Stoffsuspension zum Fibrillieren der Wirkung von Scherkanten und/oder Rippen ausgesetzt werden.

In einer beispielsweisen Ausführungsform kann sich das erfindungsgemäße Verfahren dadurch auszeichnen, dass die Wirkung der Scherkanten und/oder Prallflächen auf die Fasern im Bereich der im unteren Bereich nach außen gerichteten Strömung ausgeübt wird.

In einer beispielsweisen Ausführungsform kann sich die erfindungsgemäße Vorrichtung dadurch auszeichnen, dass die zur Achse des Rotors koaxiale Öffnung des Verdrängungskörpers trichterförmig ist, wobei der erweiterte Bereich der Öffnung zum Deckel des Behälters hinweist.

In einer beispielsweisen Ausführungsform kann sich die erfindungsgemäße Vorrichtung dadurch auszeichnen, dass die im Behälter vorgesehenen Statorbleche vom Verdrängungskörper radial nach außen abstehend vorgesehen sind und bis zur Innenseite der Wand des Behälters ragen.

In einer beispielsweisen Ausführungsform kann sich die erfindungsgemäße Vorrichtung dadurch auszeichnen, dass eine Leitung für das Zuführen von aufzubereitender Stoffsuspension im Deckel des Behälters mündet.

In einer beispielsweisen Ausführungsform kann sich die erfindungsgemäße Vorrichtung dadurch auszeichnen, dass die Achse der Leitung koaxial zum ringförmigen Verdrängungskörper und zum Rotor ausgerichtet ist.

In einer beispielsweisen Ausführungsform kann sich die erfindungsgemäße Vorrichtung dadurch auszeichnen, dass im Deckel wenigstens eine, vorzugsweise aber zwei, drei oder mehr als drei, Leitung(en) für das Abführen aufbereiteter Stoffsuspension vorgesehen ist/sind.

In einer beispielsweisen Ausführungsform kann sich die erfindungsgemäße Vorrichtung dadurch auszeichnen, dass die Rippen an der Dispergierscheibe von innen nach außen an Höhe zunehmen.

In einer beispielsweisen Ausführungsform kann sich die erfindungsgemäße Vorrichtung dadurch auszeichnen, dass die Rippen zu Radialebenen, die durch die Achse des Rotors gehen, schräg gestellt sind.

In einer beispielsweisen Ausführungsform kann sich die erfindungsgemäße Vorrichtung dadurch auszeichnen, dass die Rippen der Dispergierscheibe gekrümmt sind.

In einer beispielsweisen Ausführungsform kann sich die erfindungsgemäße Vorrichtung dadurch auszeichnen, dass der Rotor durch den Boden des Behälters in das Innere des Behälters ragt.

In einer beispielsweisen Ausführungsform kann sich die erfindungsgemäße Vorrichtung dadurch auszeichnen, dass am Rotor ein Umwälzpropeller vorgesehen ist.

In einer beispielsweisen Ausführungsform kann sich die erfindungsgemäße Vorrichtung dadurch auszeichnen, dass im Bereich der Mündung der Leitung eine als Diffusor wirkende Verengung vorgesehen ist.

In einer beispielsweisen Ausführungsform kann sich die erfindungsgemäße Vorrichtung dadurch auszeichnen, dass die Verengung durch eine Ringrippe, insbesondere eine Ringrippe mit dreieckförmigem Querschnitt, gebildet ist.

In einer beispielsweisen Ausführungsform kann sich die erfindungsgemäße Vorrichtung dadurch auszeichnen, dass zwischen Rippen der Dispergierscheibe und gehäusefesten Statorzähnen bzw. Statorblechen Scherkanten und Prallflächen ausgebildet sind.

In einer beispielsweisen Ausführungsform kann sich die erfindungsgemäße Vorrichtung dadurch auszeichnen, dass die Statorzähne am Verdrängungskörper angeordnet sind.

In einer beispielsweisen Ausführungsform kann sich die erfindungsgemäße Vorrichtung dadurch auszeichnen, dass die Statorbleche am Gehäuse des Behälters angeordnet sind.

In einer beispielsweisen Ausführungsform kann sich die erfindungsgemäße Vorrichtung dadurch auszeichnen, dass die Statorbleche im Bereich des am Behälter angeschlossenen unteren Endes der Umwälzleitung, insbesondere in dessen vorzugsweise als Stutzen ausgebildetem Ende, vorgesehen sind.

Bei dem erfindungsgemäßen Verfahren werden Strömungsverhältnisse erreicht, die ein wirksames Fibrillieren und Entstippen ergeben. Bei der erfindungsgemäßen Vorrichtung werden durch den in einer möglichen Ausführungsform im Inneren des Behälters vorgesehenen, ringförmigen Verdrängungskörper Strömungsverhältnisse der Stoffsuspension sichergestellt, bei welchen die Strömung der Stoffsuspension zwingend über die Dispergierscheibe geführt wird.

Zusätzlich wird durch den Verdrängungskörper im Inneren des Behälters der erfindungsgemäßen Vorrichtung das Volumen verkleinert, sodass ein intensiveres Aufbereiten von Stoffsuspensionen, insbesondere solchen, die aus Altpapiersuspension gewonnen werden, erreicht wird, indem die Fasern in der Stoffsuspension wirksamer durch Dispergieren vereinzelt und entstippt werden.

Auch das Fibrillieren der Fasern erfolgt beim Verwenden der erfindungsgemäßen Vorrichtung wirksamer als bisher.

Durch die bei der erfindungsgemäßen Vorrichtung vorzugswiese vorgesehenen Scherkanten und Prallflächen wird bei einem einzigen Durchgang der Stoffsuspension eine mehrfach fibrillierende Wirkung erreicht, sodass die eingetragene Leistung erheblich erhöht und an den jeweiligen Stoff angepasst werden kann.

Die Scherkanten an der Dispergierscheibe des Rotors können zur Radialebene schräg gestellt sein oder radial ausgerichtet sein. Dies gilt auch für die Statorzähne, die in einer bevorzugten Ausführungsform an der Unterseite eines Verdrängungskörpers angebracht sein können.

Stoffsuspensionen, die mit der erfindungsgemäßen Vorrichtung aufbereitet werden können, sind Suspensionen, die als Stoff beispielsweise enthalten:
Zellstoff,
Holzstoff,
Altpapier,
Primär- und Sekundärfasern,
Fasern aus geschredderten Kleindungsstücken und
Mischungen derselben.

Mit der erfindungsgemäßen Vorrichtung ist ein wirksames Modifizieren der Fasern des Stoffes in der Stoffsuspension durch Vereinzeln, Fibrillieren, Entstippen u.s.w. möglich. Dabei wird ein Fibrillieren ohne Kürzen der Fasern erreicht.

Weitere Einzelheiten und Merkmale der erfindungsgemäßen Vorrichtung ergeben sich aus nachstehender Beschreibung einer bevorzugten Ausführungsform anhand der Zeichnungen. Es zeigt:
- Fig. 1: eine erfindungsgemäße Vorrichtung in Schrägansicht,
- Fig. 2: die Vorrichtung aus Fig. 1 in geschnittener Schrägansicht,
- Fig. 3: im Axialschnitt teilweise die Vorrichtung aus Fig. 1 mit eingezeichneten Strömungsverhältnissen,
- Fig. 4: im Schnitt längs der Linie A-A von Fig. 7 eine Ausführungsform der Vorrichtung von Fig. 1 bis Fig. 3,
- Fig. 5: eine Einzelheit der Ausführungsform von Fig. 4 im Schnitt,
- Fig. 6: die Ausführungsform von Fig. 4 und 5 in geschnittener Schrägansicht,
- Fig. 7: einen Schnitt längs der Linie B-B in Fig. 4,
- Fig. 8: eine abgeänderte Ausführungsform im Schnitt längs der Linie B-B von Fig. 4,
- Fig. 9: eine weitere Ausführungsform im Schnitt längs der Linie B-B von Fig. 4 und,

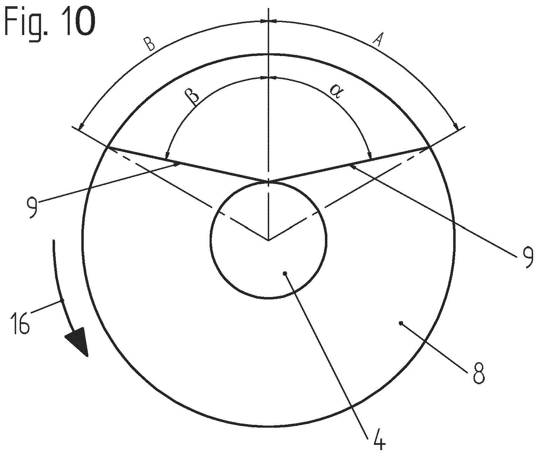

- Fig. 10: schematisch zwei mögliche Ausrichtungen von Rippen an der Dispergierscheibe des Rotors.

Eine erfindungsgemäße Vorrichtung 1 umfasst einen Behälter 2, der an seiner Oberseite durch einen Deckel 3 verschlossen ist. In den Behälter 2 ragt von unten her ein Rotor 4, der in einem unterhalb des Behälters 2 angeordneten Lagerkörper 5 gelagert ist.

Die Durchführung des Rotors 4 in den Behälter 2 ist durch Gleitringdichtungen 6 abgedichtet.

Der Rotor 4 ist im Lagerkörper 5 durch Wälzlager 7 gelagert.

Der Rotor 4 trägt in seinem im unteren Bereich des Behälters 2 angeordneten Teil eine Dispergierscheibe 8, die an ihrer Oberseite und an ihrer Unterseite Rippen 9, 10 aufweist, die gegenüber der Radialrichtung schräggestellt sind. Dabei ist die Ausrichtung der Rippen 9, 10 - wie in Fig. 14 schematisch dargestellt - bezogen auf die Drehrichtung des Rotors 4 in einer Ausführungsform so gewählt, dass ihre radial inneren Enden bezogen auf die Drehrichtung (Pfeil 14 in Fig. 14) weiter vorne liegen (Abstand A) als die radial äußeren Enden der Rippen 9, 10. Dies gilt für die eine in Fig. 14 beispielhaft eingezeichnete Rippe 9 und/oder 10, die mit ihrer Radialebene R einen spitzen Winkel α einschließt.

In einer in Fig. 14 ebenfalls dargestellten abgeänderten Ausführungsform ist die in Fig. 14 beispielhaft dargestellte Rippe 9 und/oder 10 so ausgerichtet, dass ihr radial äußeres Ende, bezogen auf die Drehrichtung (Pfeil 16 in Fig. 14), weiter hinten liegt (Abstand B) als ihr radial inneres Ende. Diese Rippe 9 und/oder 10 schließt mit der Radialebene R den spitzen Winkel β ein.

Im Übrigen können die Rippen 9 und/oder 10 von innen nach außen an Höhe zunehmen.

Die Rippen 9 an der Oberseite der Dispergierscheibe 8 und/oder die Rippen 10 an der Unterseite der Dispergierscheibe 8 sind beispielsweise gekrümmt. Gekrümmte Rippen 9 und/oder 10 sind entweder so ausgerichtet, dass die konvexe Seite der Rippen 9/10 bezogen auf die Drehrichtung (Pfeil 16) der Dispergierscheibe 8 nach vorne weist oder so ausgerichtet, dass die konvexe Seite, bezogen auf die Drehrichtung (Pfeil 16) der Dispergierscheibe 8, nach hinten weist.

Die Rippen 9 an der Oberseite der Dispergierscheibe 8 und/oder die Rippen 10 an der Unterseite der Dispergierscheibe 8 können also auch so gekrümmt sein, dass die konkave Seite der Rippen 9/10 bezogen auf die Drehrichtung (Pfeil 16) der Dispergierscheibe 8 nach vorne oder nach hinten weist.

Die Rippen 9 an der Oberseite der Dispergierscheibe 8 und/oder die Rippen 10 an der Unterseite der Dispergierscheibe 8 können auch gerade Rippen sein.

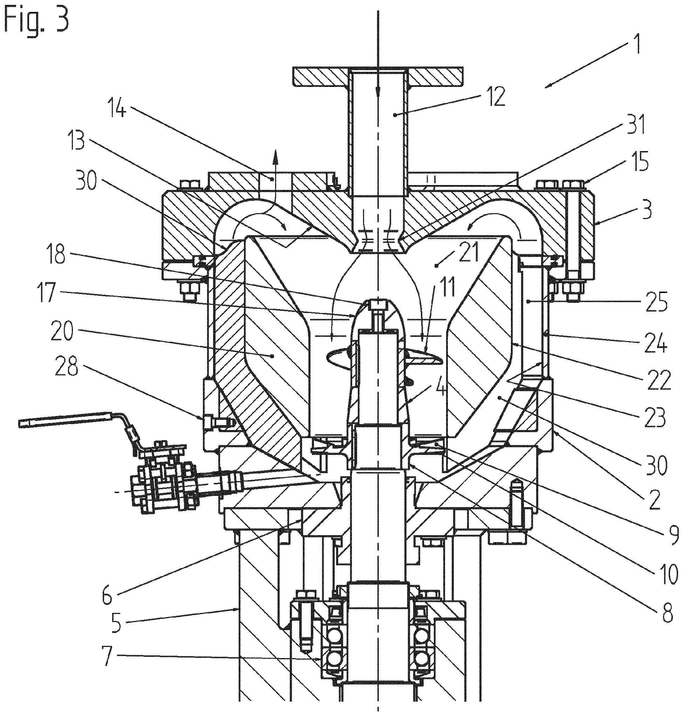

In einer Ausführungsform (Fig. 3) ist am Rotor 4 oberhalb der Dispergierscheibe 8 ein Propeller 11 mit Flügeln vorgesehen, der in der aufzubereitenden Stoffsuspension eine nach unten auf die Dispergierscheibe 8 hin gerichtete Strömung erzeugt. Der Propeller 11 ist nicht zwingend vorgesehen, da durch die erfindungsgemäße Konstruktion der Vorrichtung 1 mit dem noch zu erläuternden Verdrängungskörper 20 auch ohne Propeller 11 eine hinreichend definierte Strömung der Stoffsuspension erreicht wird.

Im Deckel 3 mündet koaxial zum Rotor 4 eine Leitung 12, durch welche die aufzubereitende Stoffsuspension in den Behälter 2 strömt.

An der Innenseite des Deckels 3 ist nach innen weisend ein kegelförmiger Vorsprung 13 vorgesehen, in dessen Mitte die Leitung 12 für das Zuführen der Stoffsuspension mündet.

Diese Anordnung der Leitung 12 ergibt ein optimales Mischen der Stoffsuspension, die sich im Behälter 2 im Kreislauf befindet mit neu in den Behälter 2 zugeführter Stoffsuspension.

Dadurch, dass am Ende der Leitung 12 (Mündung in den Behälter 2) eine als Diffusor wirkende Verengung 31 (gebildet durch eine im Querschnitt dreieckförmige Ringrippe) vorgesehen ist, wird das vorstehend erwähnte Mischen von zugeführter Stoffsuspension mit Stoffsuspension, die bereits im Behälter 2 ist und aufbereitet wird, vorteilhaft unterstützt.

Im gezeigten Ausführungsbeispiel sind rings um die Zuführleitung 12 drei Abführleitungen 14 für das Abführen aufbereiteter Faserstoffsuspension vorgesehen.

Der Deckel 3 ist mit dem Behälter 2 verschraubt (Schrauben 15).

Im Innenraum des Behälters 2 ist ein ringförmiger Verdrängungskörper 20 vorgesehen, dessen innere Öffnung 21 etwa trichterförmig ausgebildet ist. Zwischen der Außenfläche 22 des Verdrängungskörpers 20 und der Innenseite 23 der Wand 24 des Behälters 2 ist ein ringförmiger Kanal 25 vorgesehen, in dem aufzubereitende Stoffsuspension nach dem Verlassen der Dispergierscheibe 8 nach oben strömt. Durch die trichterförmige, innere Öffnung 21 des Verdrängungskörpers 20 strömt Stoffsuspension, gegebenenfalls unterstützt durch den Propeller 11 am Rotor 4, nach unten in Richtung auf die Dispergierscheibe 8.

In dem gezeigten Ausführungsbeispiel ist das obere Ende des Rotors 4 durch eine strömungsgünstig geformte Abdeckung 17, die mit Hilfe einer Inbusschraube 18 im Rotor 4 festgelegt ist, abgedeckt.

An der Außenseite des Verdrängungskörpers 20 sind als Leitbleche Statorbleche 30 vorgesehen, die den ringförmigen Kanal 25 (Spalt) zwischen der Außenseite 22 des Verdrängungskörpers 20 und der Innenseite 23 der Wand 24 des Behälters 2 (insbesondere in dessen unteren Teil) überbrücken, also mit ihren freien Rändern an der Innenseite 23 der Wand 24 des Behälters 2 anliegen.

Um den Verdrängungskörper 20 im Inneren des Behälters 2 festzuhalten, können (vgl. Fig. 2 und 3) Befestigungsschrauben 28 vorgesehen sein.

Bei Betrieb der Vorrichtung wird Produkt (aufzubereitende Stoffsuspension) über die Leitung 12 so zugeführt, dass sich frisch eingebrachte Stoffsuspension mit der Stoffsuspension, die im Behälter 2 in Richtung der Pfeile zirkuliert, mischt. So wird sichergestellt, dass es zu keiner Kurzschlussströmung kommt, bei der frisch eingebrachte Stoffsuspension direkt über die Auslassleitungen 14 aus der Vorrichtung 1 wieder abströmt, ohne dass ein Aufbereiten der Stoffsuspension stattgefunden hat.

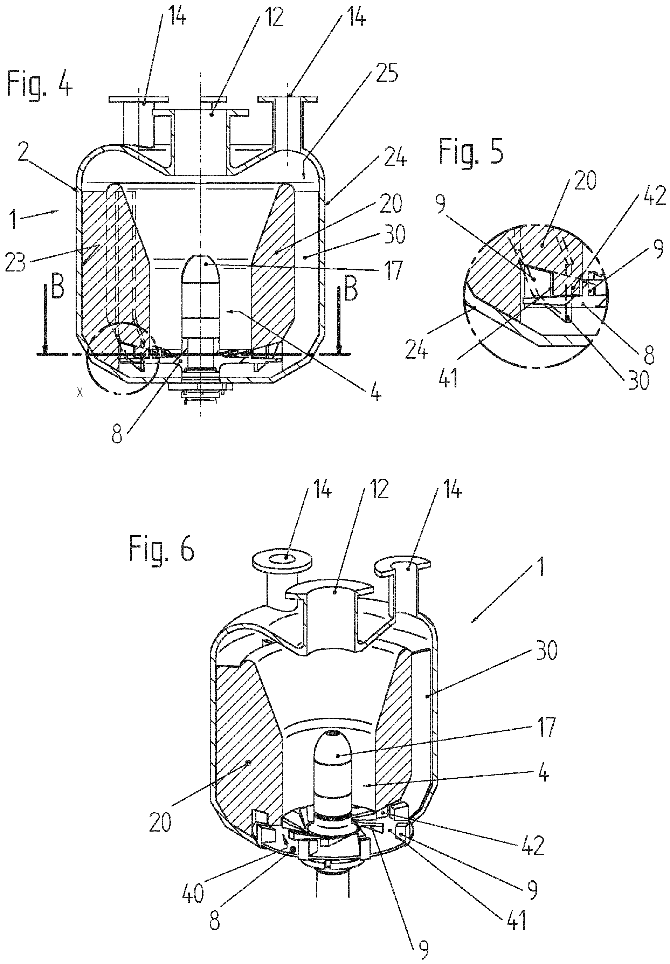

Die in den Fig. 4 bis 9 gezeigte Ausführungsform einer erfindungsgemäßen Vorrichtung entspricht im Wesentlichen der Ausführungsform von den Fig. 1 bis 3.

Bei der Ausführungsform gemäß den Fig. 4 bis 9 ist eine größere Anzahl an aktiven Scherkanten und Prallflächen vorgesehen, wenngleich die Abmessungen des Rotors 4 im Wesentlichen gleich bleiben können. Hierzu sind die Rippen 9 am Rotor 4 bzw. der Dispergierscheibe 8 unterbrochen, sodass sich eine zur Achse des Rotors 4 konzentrische "Ringnut" 40 (gebildet durch die ringförmige Reihe von Unterbrechungen 41) ergibt. In diese Ringnut 40 greifen Statorzähne 42 ein, die an der Unterseite des Verdrängungskörpers 20 angeordnet sind. Bei dieser Ausführungsform gelangen die Stofffasern beim einzige Durchlauf durch die Rotor/Statoreinheit mehrfach an fibrillierend wirkenden Scherkanten und Prallflächen vorbei, sodass die eingetragene Leistung erheblich erhöht ist. Überdies ist es durch Wahl der Anordnung mit Abmessungen der Unterbrechungen 41 in den Rippen 9 an der Dispergierscheibe 8 des Rotors 4 einerseits und der Statorzähne 42 am Verdrängungskörper 20 andererseits möglich, den Abstand zwischen den einzelnen Arbeitsflächen an das jeweils zu verarbeitende Produkt (Stoffsuspension) angepasst zu wählen.

Wie in den Fig. 8 und 9 gezeigt, können die Statorbleche 30 am Verdrängungskörper vorwärts oder rückwärts gerichtet, also zu Radialebenen schräg gestellt sein oder radial verlaufen (Fig. 7). So kann der innerste Ring aus ringförmig angeordneten Teilen der Rippen 9 rückwärts gerichtete Scherkanten haben und der äußere Ring aus ringförmig angeordneten Teilen der Rippen 9 vorwärts gerichtete Scherkanten. Sinngemäß das Gleiche gilt für die Statorzähne 42 an der Unterseite des Verdrängungskörpers. Diese können in unterschiedlichen Wirkwinkeln β angeordnet sein, wie dies in den Fig. 7 bis 9 schematisch dargestellt ist.

Die Anzahl der ringförmig angeordneten Rippenteile an der Dispergierscheibe 8 einerseits und der Statorzähne 42 an der Unterseite des Verdrängungskörpers 20 andererseits kann an das jeweilige Produkt angepasst gewählt werden.

Bei der in den Fig. 1 bis 3 und 4 bis 9 gezeigten Ausführungsformen einer erfindungsgemäßer Vorrichtung, die zum Ausführen es erfindungsgemäßen Verfahrens geeignet sind, wird die nach oben gerichtete Strömung der Stoffsuspension von der nach unten gerichteten Strömung räumlich getrennt geführt, wobei die räumliche Trennung durch den Verdrängungskörper 20 erreicht wird, indem die Stoffsuspension durch den Ringspalt in Form des ringförmigen Kanals 25 (unterbrochen durch die Statorbleche 30) zwischen der Wand des Behälters 2 und der Außenfläche des Verdrängungskörpers 20 gebildeten Rindspalt nach oben strömt.

Bei Betrieb der Vorrichtung 1 wird im Behälter 2 und in der Zu-und Abführleitung 12, 14 ein Druck aufrechterhalten, der dem Systemdruck in der Leitung 12 für die Stoffsuspension entspricht.

Die Verweilzeit der Stoffsuspension im Behälter 2 wird beispielsweise dadurch geregelt, dass nur dann Stoffsuspension, die noch aufzubereiten ist, zugeführt wird, wenn die im Behälter 2 vorhandene Stoffsuspension fertig aufbereitet, also die Fasern in ihr durch Dispergieren vereinzelt und entstippt worden sind, und wobei auch ein Fibrillieren der Fasern ausgeführt worden ist. Die Verweilzeit von Stoffsuspension im Behälter 2 wird beispielsweise durch das Verhältnis von im Kreislauf befindlicher Menge an Stoffsuspension und frisch zugeführter Stoffsuspension und der Drehzahl des Aggregates (Dispergierscheibe 8) bestimmt.

Die im Behälter herrschende Strömung hat eine Umwälzrate, die um ein Vielfaches höher ist als die kontinuierlich durchfließende Stoffsuspension. So wird ein mehrfacher Umlauf der Stoffsuspension im Behälter gewährleistet. Die Fraktionsmenge der Stofffasern, welche tatsächlich nur wenige Male die Fibrillierzone durchströmt, wird vernachlässigbar minimiert, bevor diese die Maschine über die Ausströmkanäle verlässt. Das Fibrillierergebnis wird somit durch nicht optimal fibrillierte Fasern kaum negativ beeinflusst.

Mit der erfindungsgemäßen Vorrichtung 1 ist es mit hoher Wirksamkeit möglich, beim Aufbereiten beispielsweise von Zellstoff noch zusammenhaltende Fasern durch Entstippen voneinander zu trennen, indem Konglomerate von Fasern aufgelöst werden.

Des Weiteren wird in der erfindungsgemäßen Vorrichtung 1 ein Fibrillieren der Fasern durch Aufspleißen der einzelnen Fasern erreicht, das durch Reiben der Fasern aneinander und durch Einwirkung von Zentrifugalkräften bewirkt wird.

Zusammenfassend kann ein Ausführungsbeispiel der Erfindung wie folgt beschrieben werden:
Eine Vorrichtung 1 zum Aufbereiten einer Stoffsuspension, insbesondere einer Zellstoffsuspension, mit einem Behälter 2, mit im Inneren des Behälters 2 vorgesehenen, als Leitbleche ausgebildeten Statorblechen 30 und mit einem im Behälter 2 vorgesehenen Rotor 4, an dem eine Dispergierscheibe 8 vorgesehen ist, umfasst einen im Inneren des Behälters 2 vorgesehenen, ringförmigen Verdrängungskörper 20, dessen Außenfläche 22 von der Innenfläche 23 der Wand 24 des Behälters 2 Abstand aufweist. Die innere, koaxial zum Rotor 4 angeordnete Öffnung 21 des Verdrängungskörpers 20 ist trichterförmig, wobei der erweiterte Bereich der Öffnung zum Deckel 3 des Behälters 2 hinweist. Die im Behälter 2 vorgesehenen Statorbleche 30 überbrücken den Kanal 25 zwischen der Außenseite 22 des Verdrängungskörpers 20 und der Innenseite 23 der Wand 24 des Behälters 2.

Fibrillierzone durchströmt, wird vernachlässigbar minimiert, bevor diese die Maschine über die Ausströmkanäle verlässt. Das Fibrillierergebnis wird somit durch nicht optimal fibrillierte Fasern kaum negativ beeinflusst.

Mit der erfindungsgemäßen Vorrichtung 1 ist es mit hoher Wirksamkeit möglich, beim Aufbereiten beispielsweise von Zellstoff noch zusammenhaltende Fasern durch Entstippen voneinander zu trennen, indem Konglomerate von Fasern aufgelöst werden.

Des Weiteren wird in der erfindungsgemäßen Vorrichtung 1 ein Fibrillieren der Fasern durch Aufspleißen der einzelnen Fasern erreicht, das durch Reiben der Fasern aneinander und durch Einwirkung von Zentrifugalkräften bewirkt wird.

Zusammenfassend kann ein Ausführungsbeispiel der Erfindung wie folgt beschrieben werden:
Eine Vorrichtung 1 zum Aufbereiten einer Stoffsuspension, insbesondere einer Zellstoffsuspension, mit einem Behälter 2, mit im Inneren des Behälters 2 vorgesehenen, als Leitbleche ausgebildeten Statorblechen 30 und mit einem im Behälter 2 vorgesehenen Rotor 4, an dem eine Dispergierscheibe 8 vorgesehen ist, umfasst einen im Inneren des Behälters 2 vorgesehenen, ringförmigen Verdrängungskörper 20, dessen Außenfläche 22 von der Innenfläche 23 der Wand 24 des Behälters 2 Abstand aufweist. Die innere, koaxial zum Rotor 4 angeordnete Öffnung 21 des Verdrängungskörpers 20 ist trichterförmig, wobei der erweiterte Bereich der Öffnung zum Deckel 3 des Behälters 2 hinweist. Die im Behälter 2 vorgesehenen Statorbleche 30 überbrücken den Kanal 25 zwischen der Außenseite 22 des Verdrängungskörpers 20 und der Innenseite 23 der Wand 24 des Behälters 2.

## Patentansprüche

1. Verfahren zum Aufbereiten einer Fasern enthaltenden Stoffsuspension, bei dem die Fasern der Stoffsuspension durch Dispergieren vereinzelt (fibrilliert) und entstippt werden, wobei beim Dispergieren in der Stoffsuspension eine Strömung erzeugt wird, die im Inneren der Stoffsuspension nach unten, im unteren Bereich der Stoffsuspension nach außen und im äußeren Bereich der Stoffsuspension nach oben gerichtet ist, **dadurch gekennzeichnet, dass** die nach oben gerichtete Strömung der Stoffsuspension von der im Inneren der Stoffsuspension nach unten gerichteten Strömung räumlich getrennt geführt wird und dass die Stoffsuspension in einem Behälter (2) in Strömung versetzt wird, wobei die im äußeren Bereich nach oben gerichtete Strömung durch einen Ringspalt (25) zwischen der Wand (24) des Behälters (2) und einen im Behälter (2) angeordneten, ringförmigen Verdrängungskörper (20) geführt ist.

2. Verfahren nach Anspruch 1, **dadurch gekennzeichnet, dass** aufzubereitende Stoffsuspension von oben her in die im Inneren der Stoffsuspension nach unten gerichtete Strömung aufgegeben wird.

3. Verfahren nach Anspruch 1 oder 2, **dadurch gekennzeichnet, dass** aufbereitete Stoffsuspension der im äußeren Bereich nach oben gerichteten Strömung entnommen wird.

4. Verfahren nach einem der Ansprüche 1 bis 3, **dadurch gekennzeichnet, dass** die nach außen gerichtete Strömung erzeugt wird, indem auf die Stoffsuspension eine radial nach außen gerichtete Beschleunigung ausgeübt wird.

5. Verfahren nach Anspruch 4, **dadurch gekennzeichnet, dass** die Beschleunigung durch einen drehangetriebenen Rotor (4) mit Dispergierscheibe (8) erteilt wird.

6. Verfahren nach einem der Ansprüche 1 bis 5, **dadurch gekennzeichnet, dass** die in der Stoffsuspension im Inneren der Stoffsuspension nach unten gerichtete Strömung durch einen drehangetriebenen Propeller (11) erzeugt wird.

7. Verfahren nach einem der Ansprüche 1 bis 6, **dadurch gekennzeichnet, dass** zusammenhängende Fasern der Stoffsuspension durch Durchmischen der Stoffsuspension aufgelöst (entstippt) werden.

8. Verfahren nach einem der Ansprüche 1 bis 7, **dadurch gekennzeichnet, dass** das Dispergieren des Stoffes im Batchbetrieb (absatzweise) oder im kontinuierlichen Durchlaufbetrieb ausgeführt wird.

9. Verfahren nach einem der Ansprüche 1 bis 8, **dadurch gekennzeichnet, dass** die Fasern der Stoffsuspension zum Fibrillieren der Wirkung von Scherkanten und/oder Rippen ausgesetzt werden.

10. Verfahren nach Anspruch 9, **dadurch gekennzeichnet, dass** die Wirkung der Scherkanten und/oder Prallflächen auf die Fasern im Bereich der im unteren Bereich nach außen gerichteten Strömung ausgeübt wird.

11. Vorrichtung zum Ausführen des Verfahrens nach einem der Ansprüche 1 bis 10, umfassend einen Deckel (3), einen Behälter (2), im Inneren des Behälters (2) vorgesehene, als Leitbleche ausgebildete Statorbleche (30), und einen im Behälter (2) vorgesehenen Rotor (4), an dem eine Dispergierscheibe (8) vorgesehen ist, die an ihrer Oberseite und/oder ihrer Unterseite Rippen (9, 10) aufweist, **dadurch gekennzeichnet, dass** im Inneren des Behälters (2) ein ringförmiger Verdrängungskörper (20) vorgesehen ist, dessen Außenfläche (22) von der Innenfläche (23) der Wand (24) des Behälters (2) Abstand aufweist und dessen innere Öffnung (21) koaxial zum Rotor (4) angeordnet ist.

12. Vorrichtung nach Anspruch 11, **dadurch gekennzeichnet, dass** die zur Achse des Rotors (4) koaxiale Öffnung (21) des Verdrängungskörpers (20) trichterförmig ist, wobei der erweiterte Bereich der Öffnung zum Deckel (3) des Behälters (2) hinweist.

13. Vorrichtung nach Anspruch 11 oder 12, **dadurch gekennzeichnet, dass** die im Behälter (2) vorgesehenen Statorbleche (30) vom Verdrängungskörper (20) radial nach außen abstehend vorgesehen sind und bis zur Innenseite (23) der Wand (24) des Behälters (2) ragen.

14. Vorrichtung nach einem der Ansprüche 11 bis 13, **dadurch gekennzeichnet, dass** eine Leitung (12) für das Zuführen von aufzubereitender Stoffsuspension im Deckel (3) des Behälters (2) mündet.

15. Vorrichtung nach Anspruch 14, **dadurch gekennzeichnet, dass** die Achse der Leitung (12) koaxial zum ringförmigen Verdrängungskörper (20) und zum Rotor (4) ausgerichtet ist.

16. Vorrichtung nach einem der Ansprüche 11 bis 15, **dadurch gekennzeichnet, dass** im Deckel (3) wenigstens eine, vorzugsweise aber zwei, drei oder mehr als drei, Leitung(en) (14) für das Abführen aufbereiteter Stoffsuspension vorgesehen ist/sind.

17. Vorrichtung nach einem der Ansprüche 11 bis 16, **dadurch gekennzeichnet, dass** die Rippen (9, 10) an der Dispergierscheibe (8) von innen nach außen an Höhe zunehmen.

18. Vorrichtung nach einem der Ansprüche 11 bis 17, **dadurch gekennzeichnet, dass** die Rippen (9, 10) zu Radialebenen, die durch die Achse des Rotors (4) gehen, schräg gestellt sind.

19. Vorrichtung nach einem der Ansprüche 11 bis 18, **dadurch gekennzeichnet, dass** die Rippen (9, 10) der Dispergierscheibe (8) gekrümmt sind.

20. Vorrichtung nach einem der Ansprüche 11 bis 19, **dadurch gekennzeichnet, dass** der Rotor (4) durch den Boden des Behälters (2) in das Innere des Behälters (2) ragt.

21. Vorrichtung nach einem der Ansprüche 11 bis 20, **dadurch gekennzeichnet, dass** am Rotor (4) ein Umwälzpropeller (11) vorgesehen ist.

22. Vorrichtung nach einem der Ansprüche 14 bis 21, **dadurch gekennzeichnet, dass** im Bereich der Mündung der Leitung (12) eine als Diffusor wirkende Verengung (31) vorgesehen ist.

23. Vorrichtung nach Anspruch 22, **dadurch gekennzeichnet, dass** die Verengung (31) durch eine Ringrippe, insbesondere eine Ringrippe mit dreieckförmigem Querschnitt, gebildet ist.

24. Vorrichtung nach einem der Ansprüche 11 bis 23, **dadurch gekennzeichnet, dass** zwischen Rippen (9) der Dispergierscheibe (8) und gehäusefesten Statorzähnen (42) bzw. Statorblechen (51) Scherkanten und Prallflächen ausgebildet sind.

25. Vorrichtung nach Anspruch 24, **dadurch gekennzeichnet, dass** die Statorzähne (42) am Verdrängungskörper (20) angeordnet sind.

26. Vorrichtung nach Anspruch 24, **dadurch gekennzeichnet, dass** die Statorbleche (51) am Gehäuse des Behälters (2) angeordnet sind.

## Claims

1. Method for preparing a fibre-containing substance suspension, in which the fibres of the substance suspension are isolated (fibrillated) and deflaked by dispersing, wherein, during the dispersing in the substance suspension, a flow is generated which is directed downward within the substance suspension, outward in the lower region of the substance suspension, and upward in the outer region of the substance suspension, **characterised in that** the upwardly directed flow of the substance suspension is guided physically separately from the flow that is directed downward within the substance suspension, and **in that** the substance suspension is made to flow in a container (2), wherein the flow that is directed upward in the outer region is guided through an annular gap (25) between the wall (24) of the container (2) and an annular displacement body (20) arranged in the container (2).

2. Method according to claim 1, **characterised in that** the substance suspension to be prepared is released from above into the flow that is directed downward within the substance suspension.

3. Method according to claim 1 or 2, **characterised in that** the prepared substance suspension is removed from the flow that is directed upward in the outer region.

4. Method according to any one of claims 1 to 3, **characterised in that** the outwardly directed flow is generated by exerting a radially outwardly directed acceleration onto the substance suspension.

5. Method according to claim 4, **characterised in that** the acceleration is conferred by a rotor (4) which is driven in rotation and which has a dispersing disc (8).

6. Method according to any one of claims 1 to 5, **characterised in that** the flow in the substance suspension that is directed downward within the substance suspension is generated by a propeller (11) driven in rotation.

7. Method according to any one of claims 1 to 6, **characterised in that** interconnected fibres of the substance suspension are dissolved (deflaked) by thorough mixing of the substance suspension.

8. Method according to any one of claims 1 to 7, **characterised in that** the dispersing of the substance is performed in batch operation (intermittently) or in continuous operation.

9. Method according to any one of claims 1 to 8, **characterised in that**, for fibrillation, the fibres of the substance suspension are exposed to the effect of shear edges and/or fins.

10. Method according to claim 9, **characterised in that** the effect of the shear edges and/or impact surfaces on the fibres is exerted in the region of the flow that is directed outward in the lower region.

11. Device for carrying out the method according to any one of claims 1 to 10, comprising a cover (3), a container (2), stator laminations (30), which are provided inside the container (2) and are designed as baffles, and a rotor (4), which is provided in the container (2) and on which there is provided a dispersing disc (8), which on its upper side and/or its underside has fins (9, 10), **characterised in that** an annular displacement body (20) is provided inside the container (2), the outer surface (22) of said displacement body being arranged at a distance from the inner surface (23) of the wall (24) of the container (2) and the inner opening (21) of said displacement body being arranged coaxially with the rotor (4).

12. Device according to claim 11, **characterised in that** the opening (21) of the displacement body (20) coaxial with the axis of the rotor (4) is funnel-shaped, wherein the widened region of the opening points towards the cover (3) of the container (2).

13. Device according to claim 11 or 12, **characterised in that** the stator laminations (30) provided in the container (2) are provided in a manner protruding radially outwardly from the displacement body (20) and extend as far as the inner side (23) of the wall (24) of the container (2).

14. Device according to any one of claims 11 to 13, **characterised in that** a line (12) for supplying substance suspension that is to be prepared opens out in the cover (3) of the container (2).

15. Device according to claim 14, **characterised in that** the axis of the line (12) is oriented coaxially with the annular displacement body (20) and with the rotor (4).

16. Device according to any one of claims 11 to 15, **characterised in that** at least one, but preferably two, three or more than three, line(s) (14) is/are preferably provided in the cover (3) for draining prepared substance suspension.

17. Device according to any one of claims 11 to 16, **characterised in that** the fins (9, 10) on the dispersing disc (8) increase in height from the inside to the outside.

18. Device according to any one of claims 11 to 17, **characterised in that** the fins (9, 10) are tilted towards radial planes, which pass through the axis of the rotor (4) .

19. Device according to any one of claims 11 to 18, **characterised in that** the fins (9, 10) of the dispersing disc (8) are curved.

20. Device according to any one of claims 11 to 19, **characterised in that** the rotor (4) protrudes through the base of the container (2) into the interior of the container (2).

21. Device according to any one of claims 11 to 20, **characterised in that** a circulating propeller (11) is provided on the rotor (4).

22. Device according to any one of claims 14 to 21, **characterised in that** a constriction (31) acting as a diffuser is provided in the region of the outlet of the line (12).

23. Device according to claim 22, **characterised in that** the construction (31) is formed by an annular fin, in particular an annular fin of triangular cross-section.

24. Device according to any one of claims 11 to 23, **characterised in that** shear edges and impact surfaces are formed between fins (9) of the dispersing disc (8) and stator teeth (42) or stator laminations (51) that are fixed to the housing.

25. Device according to claim 24, **characterised in that** the stator teeth (42) are arranged on the displacement body (20) .

26. Device according to claim 24, **characterised in that** the stator laminations (51) are arranged on the housing of the container (2).

## Revendications

1. Procédé pour le traitement d'une suspension de matière contenant des fibres, dans lequel les fibres de la suspension de matière sont séparées (fibrillées) et dépastillées par dispersion, un courant dirigé vers le bas à l'intérieur de la suspension de matière, vers l'extérieur dans la région inférieure de la suspension de matière et vers le haut dans la région extérieure de la suspension de matière étant créé lors de la dispersion dans la suspension de matière, **caractérisé en ce que** le courant dirigé vers le haut de la suspension de matière est guidé séparément du courant dirigé vers le bas à l'intérieur de la suspension de matière et **en ce que** la suspension de matière est mise en circulation dans une cuve (2), le courant dirigé vers le haut dans la région extérieure étant guidé à travers un interstice annulaire (25) entre la paroi (24) de la cuve (2) et un élément de déplacement (20) annulaire disposé dans la cuve (2).

2. Procédé selon la revendication 1, **caractérisé en ce que** la suspension de matière à préparer est amenée par le haut dans le courant dirigé vers le bas à l'intérieur de la suspension de matière.

3. Procédé selon la revendication 1 ou 2, **caractérisé en ce que** la suspension de matière préparée est prélevée dans le courant dirigé vers le haut dans la région extérieure.

4. Procédé selon l'une des revendications 1 à 3, **caractérisé en ce que** le courant dirigé vers l'extérieur est produit en exerçant une accélération dirigée vers l'extérieur dans le sens radial sur la suspension de matière.

5. Procédé selon la revendication 4, **caractérisé en ce que** l'accélération est imprimée par un rotor (4) entraîné en rotation et muni d'un disque de dispersion (8).

6. Procédé selon l'une des revendications 1 à 5, **caractérisé en ce que** le courant dirigé vers le bas dans la suspension de matière à l'intérieur de la suspension de matière est produit par une hélice (11) entraînée en rotation.

7. Procédé selon l'une des revendications 1 à 6, **caractérisé en ce que** les fibres agglomérées de la suspension de matière sont séparées (dépastillées) par brassage de la suspension de matière.

8. Procédé selon l'une des revendications 1 à 7, **caractérisé en ce que** la dispersion de la matière est effectuée par lots ou en circulation continue.

9. Procédé selon l'une des revendications 1 à 8, **caractérisé en ce que** les fibres de la suspension de matière sont exposées à l'action de bords de cisaillement et/ou de nervures pour les fibriller.

10. Procédé selon la revendication 9, **caractérisé en ce que** l'effet des bords de cisaillement et/ou des surfaces d'impact sur les fibres s'exerce dans la région du courant dirigé vers l'extérieur dans la région inférieure.

11. Dispositif pour la mise en oeuvre du procédé selon l'une des revendications 1 à 10, comprenant un couvercle (3), une cuve (2), des tôles de stator (30) servant de chicanes disposées à l'intérieur de la cuve (2) et un rotor (4) prévu dans la cuve (2), sur lequel est prévu un disque de dispersion (8) présentant des nervures (9, 10) sur sa face supérieure et/ou sa face inférieure, **caractérisé en ce qu'**il est prévu à l'intérieur de la cuve (2) un élément de déplacement (20) annulaire, dont la surface extérieure (22) est distante de la surface intérieure (23) de la paroi (24) de la cuve (2) et dont l'ouverture intérieure (21) est disposée de façon coaxiale par rapport au rotor (4).

12. Dispositif selon la revendication 11, **caractérisé en ce que** l'ouverture (21) de l'élément de déplacement (20) coaxiale de l'axe du rotor (4) est en forme d'entonnoir, la partie évasée de l'ouverture étant orientée vers le couvercle (3) de la cuve (2).

13. Dispositif selon la revendication 11 ou 12, **caractérisé en ce que** les tôles de stator (30) de l'élément de déplacement (20) prévues dans la cuve (2) sont saillantes dans le sens radial vers l'extérieur et dépassent jusqu'à la face intérieure (23) de la paroi (24) de la cuve (2).

14. Dispositif selon l'une des revendications 11 à 13, **caractérisé en ce qu'**une conduite (12) servant à amener la suspension de matière à traiter débouche dans le couvercle (3) de la cuve (2).

15. Dispositif selon la revendication 14, **caractérisé en ce que** l'axe de la conduite (12) est coaxial de l'élément de déplacement (20) annulaire et du rotor (4).

16. Dispositif selon l'une des revendications 11 à 15, **caractérisé en ce qu'**au moins une conduite (14), mais de préférence deux, trois ou plus de trois, est (sont) prévu(e)s dans le couvercle (3) pour évacuer la suspension de matière traitée.

17. Dispositif selon l'une des revendications 11 à 16, **caractérisé en ce que** la hauteur des nervures (9, 10) sur le disque de dispersion (8) augmente de l'intérieur vers l'extérieur.

18. Dispositif selon l'une des revendications 11 à 17, **caractérisé en ce que** les nervures (9, 10) sont placées à l'oblique par rapport à des plans radiaux passant par l'axe du rotor (4).

19. Dispositif selon l'une des revendications 11 à 18, **caractérisé en ce que** les nervures (9, 10) du disque de dispersion (8) sont incurvées.

20. Dispositif selon l'une des revendications 11 à 19, **caractérisé en ce que** le rotor (4) dépasse à travers le fond de la cuve (2) à l'intérieur de la cuve (2).

21. Dispositif selon l'une des revendications 11 à 20, **caractérisé en ce qu'**une hélice de mise en circulation (11) est prévue sur le rotor (4).

22. Dispositif selon l'une des revendications 14 à 21, **caractérisé en ce qu'**un resserrement (31) agissant comme un diffuseur est prévu dans la région du débouché de la conduite (12).

23. Dispositif selon la revendication 22, **caractérisé en ce que** le resserrement (31) est formé par une nervure annulaire, en particulier une nervure annulaire de section triangulaire.

24. Dispositif selon l'une des revendications 11 à 23, **caractérisé en ce que** des arêtes de cisaillement et des surfaces d'impact sont formées entre les nervures (9) du disque de dispersion (8) et des dents de stator (42) ou des tôles de stator (51) fixées au corps de la cuve.

25. Dispositif selon la revendication 24, **caractérisé en ce que** le dents de stator (42) sont disposées sur l'élément de déplacement (20).

26. Dispositif selon la revendication 24, **caractérisé en ce que** les tôles de stator (51) sont fixées au corps de la cuve (2).
